# EUROPEAN PATENT APPLICATION

(11) **EP 2 163 834 A1**
(43) Date of publication of application: **17.03.2010**
(21) Application number: 09011654.2
(22) Date of filing: 11.09.2009
(51) Int. Cl.: F24J 2/54, H01L 31/042

(54) **Device for tracking solar radiation for panels used for absorbing the said solar radiation**

(30) Priority: 12.09.2008 IT MO20080232
(71) Applicant: Venturelli, Massimo, 41123 Modena (MO) (IT)
(72) Inventor: Venturelli, Massimo, 41123 Modena (MO) (IT)
(74) Representative: Rustichelli, Monica

(57) **Abstract**

Device for tracking solar radiation for panels used for absorbing the said solar radiation, comprising: a free-standing vertical support structure (1, 3); components for rotation movement (3, 4) around a vertical axis; a mobile tilted structure (2) with pre-determined rotation and tilting (A) with respect to the vertical axis; a control unit for the rotation movements and variation of the tilting of panels or groups of panels (6) for the tracking; and presenting at least one panel or group of panels (6) which is mobile, on the said mobile tilted structure (2), around a horizontal axis (5) placed near the upper edge of the panel or group of panels (6), in order to enable tilting from an idle position (8), laid on the mobile tilted structure, to a maximum tilted position (7) and height of the sunlight at the azimuth of the location where the device is positioned; it also presents a tilting control mechanism (9, 11, 13) for the said minimum of one panel or group of panels. In a specific embodiment, the vertical support structure (1) is composed of a column, the end (3) of which is made to rotate around a vertical axis, advantageously coinciding with that of the column, and is connected to the mobile tilted structure (2) by means of a support (12) with the pre-determined tilting (A) of the said mobile tilted structure; the mechanisms for the vertical rotation (4) and activation of the panels or groups of panels (6) are protected inside the column (1, 3) and/or support (12).

## Description

### Technical field

The present invention relates to a device for tracking solar radiation for panels used for absorbing the said solar radiation, that is, a support structure for the panels used for absorbing the sun's rays, which tracks the orientation of the said rays from sunrise to sunset and presents an extremely advantageous composition and mechanism.

### Prior art

The prior art already includes various types of mobile structure for adapting the orientation of the absorption surfaces of solar panels, whether they are thermal for the heating of liquids, or photovoltaic for the transformation of irradiation into electrical energy, where the single panels or groups of panels form a larger surface and are made mobile on one or two rotation axes, to enable both east-west (from sunrise to sunset) tracking and variation in angle of incidence (azimuth) on the vertical plane of the structure for arranging the panels.

The structures with just one axis, even if simpler and less expensive, do not enable the optimisation of energy during the entire year as both the position of sunrise and sunset and the azimuth of the sun vary significantly during the year at medium and high latitudes where the structure may be located; the laying of the structure, even if carried out with the oscillation axis tilted, does not enable the correct positioning at the best incidence to the sun's rays of the panel(s) mounted on it.

Among the structures with two axes, the most common have a column with a rotation axis axially on the column, generally with a fifth wheel, that is, vertically, and a horizontal rotation axis, intersecting the rotating part of the column of the latter, placed at the midpoint of the panel or group of panels in order to balance the mass of the panel/groups. This prior art obliges the manufacturer to position the structures far apart from the adjacent ones in the panel positioning area for absorbing solar energy, in order to avoid a reciprocal shading effect, also considering the widely used large surface area of the group of panels. A variation of this prior art has been made by using a fixed angle of the horizontal panel support structure with the horizontal rows of panels of the group rotating on a horizontal axis in order to track the temporary azimuth reached by the sun.

Various support and rotation structures for tracking the sun's rays have been made by arranging the panels, which are generally photovoltaic but not exclusively, in horizontal rows in the panel positioning area and in rotation on a single axis for each panel, which may be horizontal, vertical or tilted, and the rotation of which is controlled by a linkage that joins adjacent panels to a single activation device, for tracking variation in the direction of the sun's rays. This device, even if less expensive than the version with the said column and rotation fifth wheel, is distributed on the base of the panel positioning area with considerable wastage of the horizontal surface, also due to the need to avoid reciprocal shading. Finally, these devices include the one described in the international patent application W02008/010250, where the single control linkage between the panels present, in horizontal alignment on the structure, the panels can be rotated around a vertical axis, creating an oscillating movement, controlled by a single rod constituting the said linkage, and this is made possible by means of articulated joints to join them and panels in the structure.

The prior art also includes the patent JP 3-145168, which describes a series of solar panels arranged on a horizontal structure that rotates around a vertical axis, so as to track the east-west orientation of the sun, in order to reduce the impact of wind pressure. The panels are placed singularly on longer components of an upper mobile structure, which slide horizontally in the same way as a folding door, so as to track the variable azimuth, from sunrise to sunset, of the sun's rays, sliding the said components horizontally along the said rotating structure and so that the tilting of the panels may be more or less tilted on the horizon. The sliding mechanism, as well as a towing device, comprises springs for returning them to the starting position, where the panels are more vertical from sunrise to sunset. The panels do not cover the entire length of the said long components of the sliding structure, in order to avoid shading when they reach the said retracted and more vertical position.

Furthermore, the prior art also includes the patent application WO 2008/068369, which describes a support and rotation structure around a vertical axis of a series of solar panels arranged in horizontal rows and staggered on the said structure; the rows of panels rotate around a respective horizontal axis at the midpoint of the said row; finally, the rows are arranged on the structure in succession, which are tilted and staggered in order to avoid reciprocal shading at the maximum incidence position of the sun's rays.

Finally, the prior art also includes the patent application WO 2001/088312, which describes a support and rotation structure around a horizontal axis of photovoltaic panels on a support structure placed in front of windows or to the sides of windows, with the aim of absorbing solar radiation and avoiding it entering windows, furthermore aiding the variation in angle of the panels in accordance with the variation in sunlight depending on the time of day and season. The patent application describes a device to control the angle of the panels with respect to the support structure on an axis on the upper (or lower) edge of the oscillating panel; this is composed of a chain and lever arms connected to the rotating edge of the panel and to the chain, so that when the chain is pulled the panel rotates and changes angle with respect to the structure.

To summarise, the latter structure described in the prior art proposes oscillating panels for absorbing solar radiation for small projects, as the panels have a shading function for a window or as a lateral structure for a window, that is, the overall dimensions of the panels and structure are not sufficient to reach adequate sizes of series of panels so as to achieve enough power to make the cost of the device economically acceptable. Yet furthermore, the proposed movement with linkage of articulated quadrilaterals acting on different planes requires a series of expensive ball joints and the need for regular maintenance, as is the case with the above-mentioned device with chains and lever arms, which means that this type of device cannot be used for panels or groups of panels with much higher masses and surface areas than may be used for a window. Finally, the close arrangement of the panels on the structure leads to shading between upper and lower adjacent rows when solar radiation is more vertical in the middle of the day.

As described in the prior art, the position of the panels for absorbing the sun's rays is achieved using expensive and bulky structures, bearing in mind the considerable technical problem of reciprocal shading, and that, when they are positioned, in order to produce acceptable electrical power levels, they occupy large surface areas. Indeed, the horizontal arrangements used are affected by possible shading by obstacles, especially when the sun is at the minimum angle on the horizon, and considering that the photovoltaic panels used are connected in groups with each other in series, and the series of panels used creates a decrease in the overall efficiency, even if only one of the panels is covered by the shade of the obstacle. Therefore, the reduction time of the efficiency is high, as the passing of the shade on adjacent panels in the group takes place over a long time period over the horizontal arrangement. In the creation of areas for absorbing the sun's rays, the devices present in the prior art are therefore arranged over large areas of the base, so as to minimise the said shading, but with arrangements that are unacceptable in the urban environment.

This prior art is subject to further improvement with regard to the possibility of producing a device for tracking solar radiation for panels for absorbing the said solar radiation, which overcomes the above-mentioned drawbacks, optimising simplicity of manufacturing, and providing the opportunity of installation in areas of possible shading, as is the case in the urban environment.

Therefore, the technical problem that is the basis for the present invention is to create a device for tracking solar radiation for panels for absorbing the said radiation, which is simple to manufacture, effective in absorbing solar radiation at all latitudes and has minimum overall dimensions, in order to be able to use it in urban environments and not only in areas for absorbing the said radiation that are especially located outside towns and cities.

A further but not least important aim of the present invention is to enable the construction of a support device for solar panels that may be used in an urban setting without requiring considerable technical spaces for manoeuvre and, in addition, are pleasing to the eye.

Finally, another technical problem that is the basis for the present invention concerns simplicity of manufacturing and functional efficacy of the movement device for the panels, in particular with regard to the means of oscillation of the panels or groups of panels around a horizontal axis enabling reduced maintenance and integral functionality for the specific composition used.

### Summary of the invention

This invention solves the above-mentioned technical problem, by using a device for tracking solar radiation for panels used for absorbing the said solar radiation, comprising: a free-standing vertical support structure; components for rotation movement around a vertical axis; a mobile tilted structure with pre-determined rotation and tilting with respect to the vertical axis; a control unit for the rotation movements and variation of the tilting of panels or groups of panels for the tracking; characterised by the fact that it presents at least one panel or group of panels which is mobile, on the said mobile tilted structure, around a horizontal axis placed near the upper edge of the panel or group of panels, in order to enable tilting from an idle position, laid on the mobile tilted structure, to a maximum tilted position and height of the sunlight at the azimuth of the location where the device is positioned; it also presents a tilting control mechanism for the said minimum of one panel or group of panels.

In a further embodiment: several panels or groups of panels positioned in a vertical direction on the mobile tilted structure and spaced apart from each other in the idle position.

In an improved embodiment of the invention: the tilting control mechanism for the panels or groups of panels comprises the connection for pushing towards the lower edge of the panel or group of panels.

In a preferred embodiment: tilting control mechanism for the panels or groups of panels comprises at least one mobile slider, inside the length of the mobile tilted structure, for the action of an activation mechanism with pushing longitudinal to the mobile tilted structure.

Furthermore, in a specific embodiment: the said slider(s) act(s) on the panels or groups of panels by means of at least one pole which rotates on the slider and on the end of the single panel or group of panels.

Yet furthermore, in a preferred embodiment: the tracking device has a pair of sliders and subsequently a pair of poles pushed between the sliders and the ends of the single panel or group of panels.

Yet furthermore, in a further embodiment: the tracking device has a pair of sliders which is reciprocally coupled by stiffening crossbeams to form a sliding frame inside the mobile tilted structure.

Furthermore, in an improved embodiment of the invention: the sliders, have, in the sliding inside the mobile tilted structure, pairs of wheels which are transversally aligned with each other in guides parallel to the said mobile aligned structure.

Yet furthermore, in a further embodiment of the invention: the stiffening crossbeams are placed at short distances, along the sliders, from the hinge pins of the poles on the said sliders.

Finally, in a further improved and preferred embodiment of the invention: the vertical support structure of the tracking device is composed of a column, the end of which is made to rotate around a vertical axis, advantageously coinciding with that of the column, and is connected to the mobile tilted structure by means of a support with the pre-determined tilting of the said mobile tilted structure; the mechanisms for the vertical rotation and activation of the panels or groups of panels are protected inside the column and/or support.

The characteristics and advantages of the present invention, in the creation of a device for tracking solar radiation for panels for absorbing the said solar radiation shall be made clear in the following description of an embodiment of the invention, purely in the form of non-limited examples, with reference to the seven drawings enclosed.

### Brief description of the drawings

Figure 1 is a schematic side view of the device for tracking solar radiation with the panels in the maximum and minimum tilted positions on the horizon, in accordance with the invention;
Figure 2 is an enlarged schematic view/section, which is similar to the previous figure but only shows the panel near the mechanisms used for carrying out the tracking;
Figure 3 shows a schematic III-III section of Figure 2 limited to a single panel laid on the structure;
Figure 4 is an enlarged schematic IV section of Figure 1, showing the panel tilting movement and mechanism with respect to the structure;
Figure 5 is a schematic enlarged section, as in Figure 4, of the panel tilting movement and mechanism with respect to the structure in the minimum tilted position, from sunrise to sunset, highlighting the forces that act on the movement mechanism of the invention;
Figure 6 is a schematic enlarged section, as in Figure 4, of the panel tilting movement and mechanism with respect to the structure in the maximum tilted position, at midday, highlighting the forces that act on the movement mechanism of the invention;

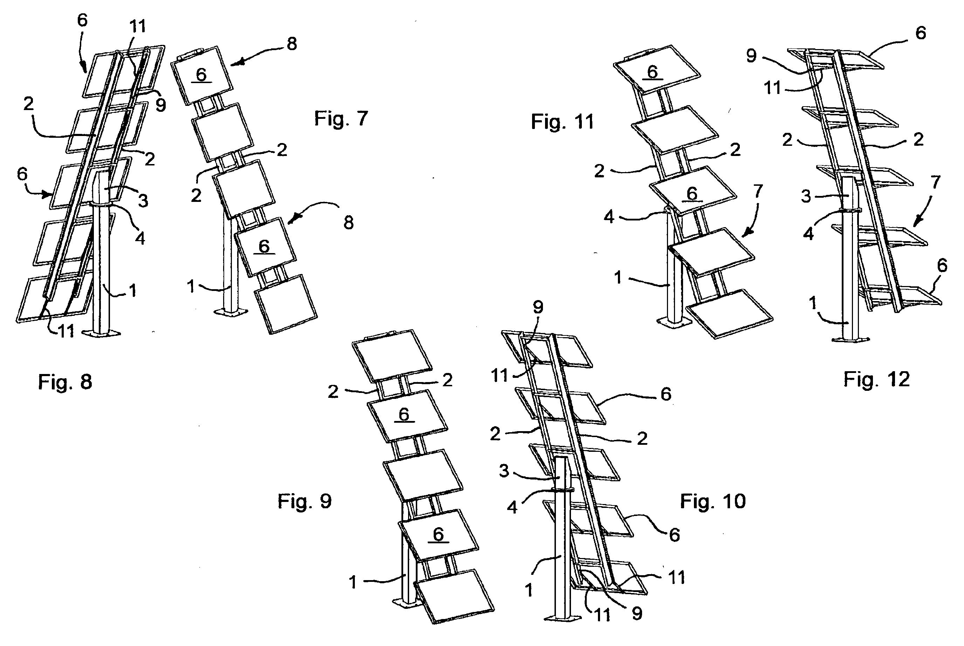

Figures 7 and 8, furthermore, show a schematic perspective view of the device from the front and back, with the panels orientated towards the sun's rays with the lowest height on the horizon, generally at sunrise and sunset;
Figures 9 and 10, yet furthermore, show a schematic perspective view of the device from the front and back, with the panels orientated towards the sun's rays with a medium height on the horizon, which occurs in the middle of the morning and afternoon;
Figures 11 and 12, finally, show a schematic perspective view of the device from the front and from the back with the panels orientated towards the sun's rays with the sun at the zenith.

### Detailed description of a preferred embodiment

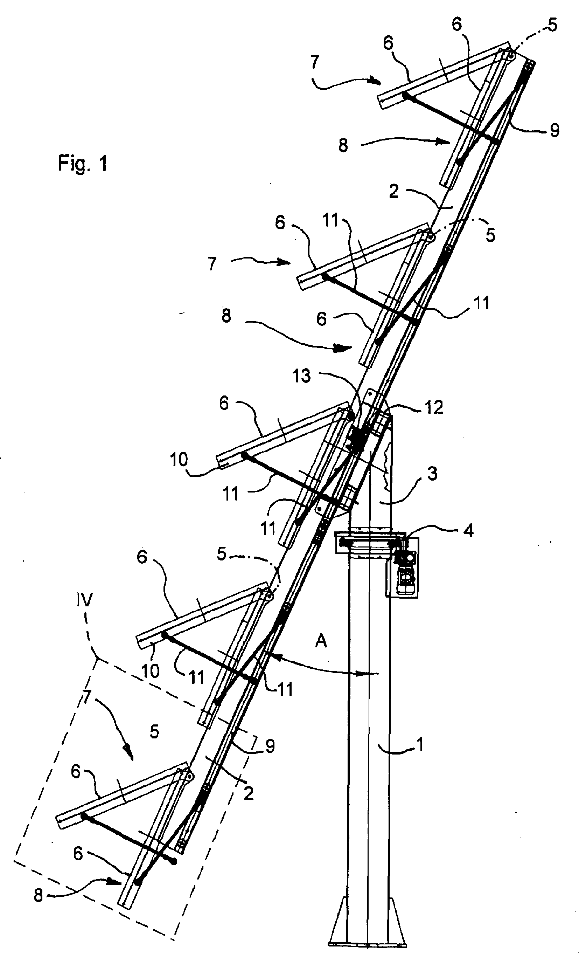

The device for tracking solar radiation for panels used for absorbing the said solar radiation, as shown in Figure 1, has a support column 1 for the structure 2 installed with pre-determined tilting angle A with respect to the vertical axis and connected to the end 3 of the column, in turn made to rotate by a rotation device 4 on the vertical axis, coinciding with the column axis. Attached to the structure and rotating around horizontal axes 5 are the panels or groups of panels 6; the axes are spaced out along the structure so as to avoid shading of the upper and lower ones, when they are in the maximum tilted position 7, towards the solar zenith, whereas the minimum tilted position is when the panels or groups of panels are laid 8 on the structure 2, so as to be positioned with the angle A with respect to the vertical. The tilting movement of the panels or groups of panels 6 is achieved by sliders 9 moving along the structure 2, which are connected near the lower ends of the arms 10 of the panels or groups of panels 6, by means of a pair of poles 11 connected using hinges between the said arms and sliders 9. Figure 1 shows five panels or groups of panels 6, but the device may be made with a lower or higher number of panels or groups of panels.

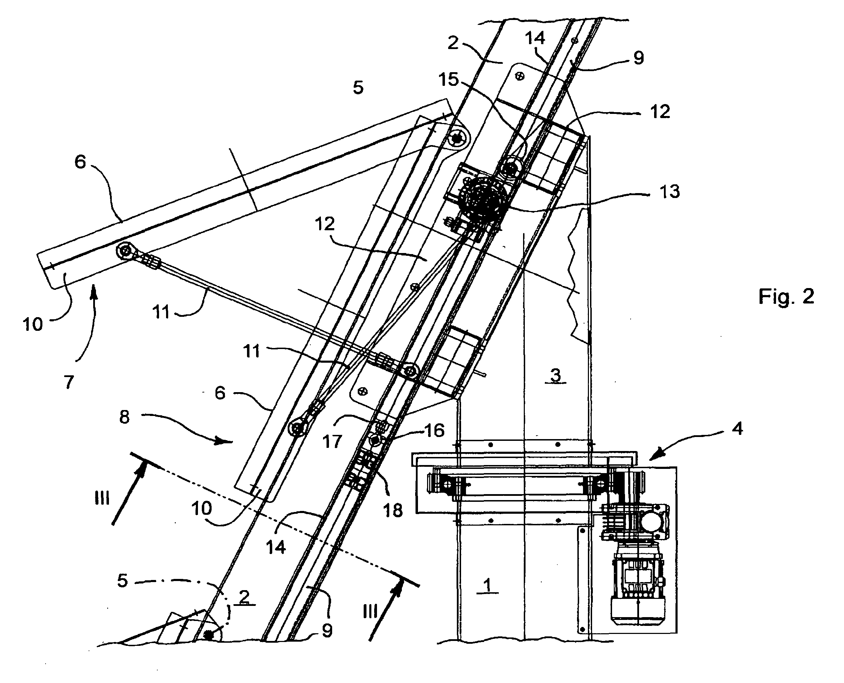

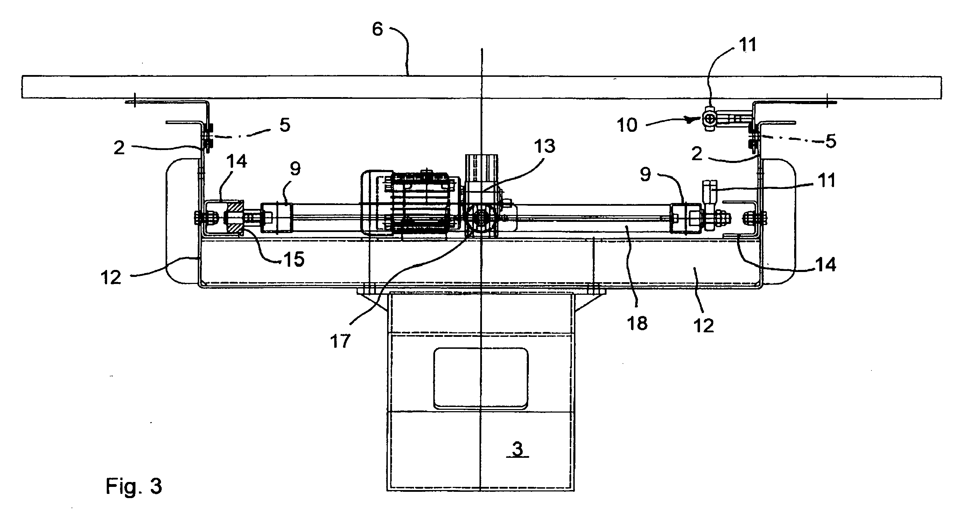

Figure 2 also shows the support 12 of the connection structure at the rotating end 3 of the column, the activation mechanism 13 of the sliders 9, the sliding of which takes place in guides 14, which are fixed to the structure 2, by means of wheels 15 supported in rotation by the said sliders and sliding in the said guides 14. Advantageously, the sliders can be made in several parts and connected to each other in succession by means of joints 16, on which the activation mechanism 13 for the sliders 9 acts, with movement that is longitudinal to the sliders. These sliders are advantageously joined by stiffening crossbeams 18 and connected to form a frame. Figure 3 shows the position of the longitudinal movement, shown here placed at the midpoint between the sliders 9, but which can be mounted on just one side or with two activation mechanisms, with one on each side.

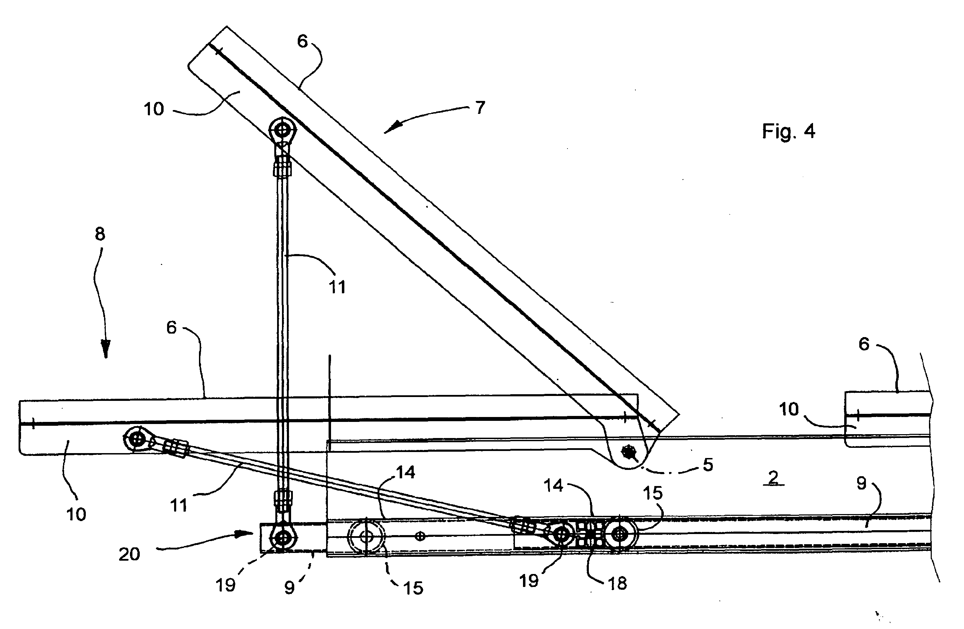

Figure 4 highlights the movement of the sliders 9 in their rotation around the horizontal axis 5 of the panels or groups of panels 6, so as to reduce reactions to the variation motion of the said panels or groups of panels 6 to a minimum. The maximum stress point on the axes 11 occurs during the initial movement away from the idle position 8. Therefore the motion, taking place with the inclined idle position A in the vertical direction, can be achieved with minimum stress as the weight of the panel or group of panels 6 is supported by the rotation pins on the axis 5. Once the critical point of the idle position has been passed, the tilting of the pole 11 with respect to the sliders 9 increases up to a negligible pushing value on the sliders, as is typical in toggle joint mechanisms, reaching the maximum tilted position 7 of the incident sunlight azimuth. Figure 4 clearly shows the reciprocal proximity between the guide wheel 15 of the sliders 9, the joining crossbeams 18 between the sliders and the hinge position on the sliders of the poles 11; the short distance between the wheel 15 and the hinge 19 enables the panel or lower group of panels to keep the wheel 15 nearer within the guides 14 also with the pole 11 in the azimuth position of the panel of group of panels.

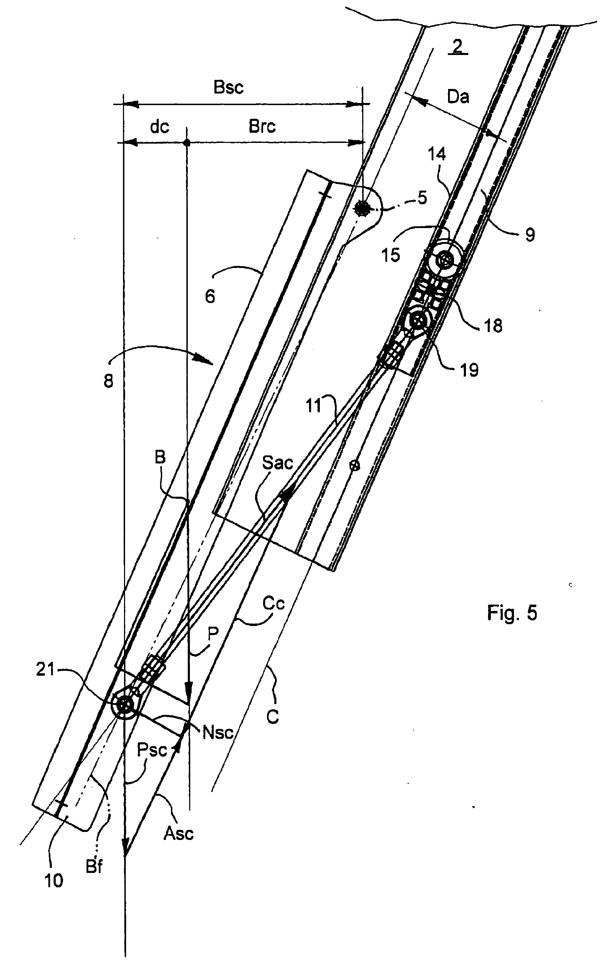

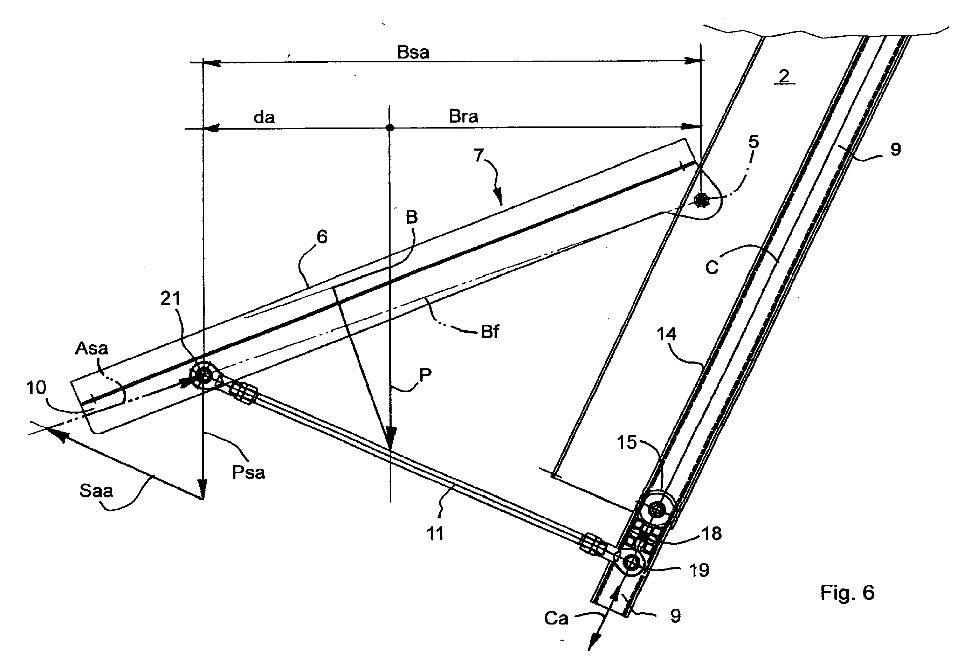

Figure 5 shows the forces that act on the poles and sliders at the minimum tilted position 8 of the panels or groups of panels, at sunrise and sunset, and Figure 6 shows the forces that act in the maximum tilted position 7 of the panels or groups of panels 6.

The mass P acts on the barycentre B, or on the axis parallel to the oscillation axis 5, which contains the barycentre of the panel or group of panels 6 and, due to the effect of the arms of the barycentre Brc and Bra lower than the arm Bsc and Bsa of the pushing point 21 of the pole 11 determines a force Psc and Psa proportional to the lower mass due to the effect of the different application point of the push Sac and Saa of the pole due to the greater distance dc and da in the arm of the reaction Sa. The compression force on the pole Sac depends on the vectorial sum of the normal Psc component, Nsc and the direction Bf, which generates rotation around the axis 5, and the push generated by the slider Cc in its direction C of action. The component Asc, parallel to its motion direction C. The component Asc, parallel to the direction Bf offloads directly onto the axis 5 pin. Therefore, under the conditions shown in Figure 5, the force Cc, even if it is not small, must overcome a force Nsc which is fairly reduced, due to the effect of the idle tilted position of the panel or groups of panels 6 and that, in any case, enables the mechanism to be triggered without blocking with the push Cc of the slider. The distance Da between the axis 5 of the rotation pin of the panels or groups of panels 6 ensures that there is no blocking and it can also be increased to make the support structure 2 for the panels or groups of panels 6 more rigid.

Figure 6 shows the maximum tilted position 7, where the forces that act on the mechanism vary significantly, indeed: the arm Bsa is greater than the arm Bsc shown in the previous figure, so the force due to the mass that acts in 21 Psa is lower than Psc. The distribution in this position takes place along the direction Bf and along the direction of the pole 11, as the said pole is at the maximum extension of the slider 9 and the pole is normal to the direction C of the said slider, so the force applied to the slider Ca may be minimum, as the said slider does not have appreciable projection in the direction of the pole 11. Also in this case, the pole is subjected to compression with the force Saa and the component Psa in the direction Bf, Asa, which offloads directly onto the axis 5 pin.

The above-mentioned forces are in line with the known functioning of the toggle joint mechanisms of the prior art, which may be adapted with regard to the specific pushing needs required in the idle and minimum tilted 8 positions, with the certainty that in the maximum tilted position, at the azimuth 7, the pushing on the slider is at a minimum, enabling secure and long-lasting functioning even years after installation. Finally, in the return movement from position 7 to position 8 during the afternoon, the action of the mass Psc aids the sliding of the slider 9 and the movement mechanism has to work as a brake due to the effect of the weight of the panels or groups of panels 6, also considering the weight of the slider 9, which here is opposite to the motion, which, on the other hand, on opening, aids the generation of the force Cc shown in Figure 5, enabling advantageous balancing of the masses/weights between the panels or groups of panels, the mass of the slider 9 and the activation force on the slider achieved by the movement mechanism 13 during the activation.

The composition of the parts of the structure is advantageously in metal, depending on the cost covered by the customer, or if particular hardness and/or lightness features are required, for example for installation on coverings or roofs of buildings also made of high-resistance metals, such as stainless steel, aluminium, or with parts in carbon fibre, both for the support structure and for the sliding or mobile parts, like the slider 9. In any case, the nuts and bolts may be advantageously made of stainless steel to make the assembly more secure and stable and to keep maintenance levels low, even years after installation. Furthermore, to eliminate maintenance entirely, or almost entirely, the wheels 15, are made of anti-wear plastic material, such as Teflon®, as well as the slider 19 that is not in contact with the guides 14 and, finally, the rotation pin for the panels or groups of panels 6 on the axis 5 is made with the interposition of watertight rolling bearings.

The functioning of the device for tracking solar radiation for panels for absorbing the said radiation described above takes place as follows. The panels or groups of panels 6 are kept in the idle position 8 during the inactive period of the device during the night. The tilting angle A is pre-determined during manufacture and takes into consideration the location where the device shall be placed and any possible obstacles to the horizon of that location, which may limit the absorption of sunlight at sunrise or sunset. The device for controlling the movements of the structure is designed to carry out an opening and closing cycle for the panels or groups of panels 6 per day, that is, depending on the installation location and the current date and time in comparison with a map of the angles and heights of the sun, orientating the panels from sunrise to sunset towards the temporary azimuth of the sun. In the same way, for the daily movement of the sun, the rotation of the structure takes place according to the time, and orientation provided by the said map with rotations from east to west of the angle reached by the sun on the specific day. Also for the rotation there is a daily cycle, which in addition has a return movement at night, so as to orientate the device towards the east at the next sunrise.

To complete the orientation control tracking device, there may be a direct sunlight sensor, so in the case of a cloudy sky, it may control the arrangement of the panels towards the maximum azimuth in order to absorb the light distributed over the sky.

The advantages in the use of the device for tracking solar radiation for panels for the absorption of the said radiation described above, are related to the simplicity of the solution with a vertical arrangement, so as to limit the overall dimensions of the base of the device. Its lower overall dimensions also allow installation, besides free-standing, on the roofs of buildings with the small surface area that would normally be available for the absorption panels that are applied to roofs.

Furthermore, a considerable advantage concerns the low cost of the parts of the device, with regard to the excellent yield and efficacy in absorbing solar radiation achieved by the tracking device of the present invention.

Yet furthermore, the vertical arrangement of the panels or groups of panels 6 enables the limitation of unwanted shading effects caused by the presence of unavoidable obstacles, such as road pilings, road signs, street lamps, traffic lights and also trees, when they cannot be removed; that is, with the device described here the effects are alleviated as they are limited to the short times when the shadows pass over the said panels or groups of panels 6, unlike in the prior art where the panels are horizontally aligned.

Another significant advantage with respect to the prior art concerns the assembly distance between the panels or groups of panels with regard to height on the tilted mobile structure 2: this distance enables air to pass through, which can cool the panels; furthermore, this distance between the panels, combined with the centred arrangement vertical to the support column enable the reduction of wind resistance with considerable improvement due to the assembly distance between the panels or groups of panels 6 with each other, so the wind can pass out through the space that is not occupied by the panels or groups of panels, thereby decreasing the pressure on the panels or groups of panels 6 and therefore the strain of the wind pushing on the device.

Yet furthermore, the functioning of the activation mechanism for tilting the panels or groups of panels 6 is made possible with very reduced maintenance, by using material with low or very low friction for components that come into contact with other components, such as the wheels 15, the guides 14, the rotation bushings in question in the wheels and in the oscillation pins in the poles 11, as well as in the pins that form the tilting axes 5. The slow activation with a single daily cycle tracking the east-west movement of the sun and azimuth enables the power used to be reduced and greatly increases the functioning duration and security of the tracking mechanism.

To conclude, the device described in the present invention has a tilting device 13 for the panels or groups of panels 6 and a device 4 for the rotation of the tilted and mobile structure 2, which are hidden from view in order to protect them from climatic elements, prolong their duration and make the device pleasing to the eye.

Naturally, in order to satisfy contingent and specific requirements, a person skilled in the art may apply to the above-described device for tracking solar radiation for panels for absorbing the said radiation described above many modifications and variations, all of which, however, are included within the scope of protection of the present invention as defined by the following claims. In the same way, even if less advantageously, the sliders 9 and the pushing poles 11 for the panels or groups of panels described may be reduced to just one slider and one pole. Again, with a view to reducing the moving parts, even if less advantageously, the activation mechanism 13 may be present in a decentralised position or on just one of the sliders 9, with respect to what is shown in the figures. Yet furthermore, the activation and tilting control mechanism (9, 11, 13) may, even if very disadvantageously, have external and visible levers on the mobile tilted structure 2.

## Claims

1. Device for tracking solar radiation for panels used for absorbing the said solar radiation, comprising: a free-standing vertical support structure (1, 3); components for rotation movement (3, 4) around a vertical axis; a mobile tilted structure (2) with pre-determined rotation and tilting (A) with respect to the vertical axis; a control unit for the rotation movements and variation of the tilting of panels or groups of panels (6) for the tracking; **characterised by** the fact that it presents at least one panel or group of panels (6) which is mobile, on the said mobile tilted structure (2), around a horizontal axis (5) placed near the upper edge of the panel or group of panels (6), in order to enable tilting from an idle position (8), laid on the mobile tilted structure, to a maximum tilted position (7) and height of the sunlight at the azimuth of the location where the device is positioned; it also presents a tilting control mechanism (9, 11, 13) for the said minimum of one panel or group of panels.

2. Tracking device, in accordance with claim 1, wherein several panels or groups of panels (6) are positioned in a vertical direction on the mobile tilted structure (2) and spaced from each other in the idle position (8).

3. Tracking device, in accordance with claim 1 or 2, wherein the tilting control mechanism for the panels or groups of panels comprises the connection (11) for pushing (10) towards the lower edge of the panel or group of panels (6).

4. Tracking device, in accordance with any of claims 1, 2 or 3, wherein the tilting control mechanism for the panels or groups of panels comprises at least one mobile slider (9), inside the length of the mobile tilted structure (2), for the action of an activation mechanism (13) with pushing longitudinal to the mobile tilted structure.

5. Tracking device, in accordance with claim 4, wherein the said slider(s) act(s) on the panels or groups of panels (6) by means of at least one pole (11) which rotates on the slider (9) and on the end (10) of the single panel or group of panels (6).

6. Tracking device, in accordance with claim 5, which has a pair of sliders (9) and subsequently a pair of poles (11) pushed between the sliders and the ends (10) of the single panel or group of panels (6).

7. Tracking device, in accordance with claim 6, wherein the pair of sliders (9) is reciprocally coupled by stiffening crossbeams (18) to form a sliding frame inside the mobile tilted structure (2).

8. Tracking device, in accordance with claim 7, wherein the sliders (9) have, in the sliding inside the mobile tilted structure (2), pairs of wheels (15) which are transversally aligned with each other in guides (14) parallel to the said mobile aligned structure.

9. Tracking device, in accordance with claim 7 or 8, wherein the stiffening crossbeams (18) are placed at short distances, along the sliders (9), from the hinge pins (19) of the poles (11) on the said sliders.

10. Tracking device, in accordance with any of the previous claims, wherein the vertical support structure (1) is composed of a column, the end (3) of which is made to rotate around a vertical axis, advantageously coinciding with that of the column, and is connected to the mobile tilted structure (2) by means of a support (12) with the pre-determined tilting (A) of the said mobile tilted structure; the mechanisms for the vertical rotation (4) and activation of the panels or groups of panels (6) are protected inside the column (1, 3) and/or support (12).
